# EUROPÄISCHE PATENTSCHRIFT

(11) **EP 4 184 032 B1**
(45) Veröffentlichungstag und Bekanntmachung des Hinweises auf die Patenterteilung: **01.11.2023**
(21) Anmeldenummer: 21209570.7
(22) Anmeldetag: 22.11.2021
(51) Int. Cl.: F16D 59/02, F16D 65/18, F16D 65/12, F16D 69/04

(54) **ELEKTROMAGNETISCH BETÄTIGBARE FEDERKRAFTBREMSE**
ELECTROMAGNETICALLY OPERATED SPRING-APPLIED BRAKE
FREIN À RESSORT À COMMANDE ÉLECTROMAGNÉTIQUE

(43) Veröffentlichungstag der Anmeldung: 24.05.2023
(73) Patentinhaber: KEB Automation KG, 32683 Barntrup (DE)
(72) Erfinder: Willer, Helmut, 32760 Detmold (DE); Westphal, Norbert, 31855 Aerzen (DE)
(74) Vertreter: Brinkmann & Partner

(56) Entgegenhaltungen:
- DE-A1- 2 133 202
- DE-A1- 2 901 784
- DE-A1- 3 234 718
- DE-U1- 20 303 060

## Beschreibung

Die Erfindung betrifft eine elektromagnetisch betätigbare Federkraftbremse, mit einer auf einer Welle verdrehfest, gleichwohl aber axial verschieblich anordbaren Bremsscheibe, einem Elektromagneten, der ein Magnetgehäuse und eine davon aufgenommene Spule aufweist, einer axial verschieblich zwischen der Bremsscheibe und dem Magnetgehäuse angeordneten Ankerplatte und einem verdrehfest am Magnetgehäuse angeordneten Flansch, wobei die Bremsscheibe und die Ankerplatte zwischen dem Flansch und dem Magnetgehäuse angeordnet sind und wobei die Ankerplatte verdrehfest, gleichwohl aber unter Zwischenordnung von Druckfederelementen axial verschieblich gegenüber dem Magnetgehäuse am Magnetgehäuse angeordnet ist, wobei metallische Reibpaarungen zwischen der Bremsscheibe und dem Flansch einerseits und zwischen der Bremsscheibe und der Ankerplatte andererseits vorgesehen sind.

Federkraftbremsen der gattungsgemäßen Art sind aus dem Stand der Technik an sich gut bekannt, weshalb es eines gesonderten druckschriftlichen Nachweises an dieser Stelle nicht bedarf. Es sei deshalb auch nur beispielhaft auf die WO 2019/007931 A1 und die DE 10 2015 214 018 A1 verwiesen, die jeweils eine gattungsgemäße Federkraftbremse zum Inhalt haben.

Eine gattungsgemäße Federkraftbremse verfügt über eine Bremsscheibe. Diese Bremsscheibe, auch Reibscheibe genannt, ist im endmontierten Zustand der Federkraftbremse auf einer Welle, beispielsweise auf der Ausgangswelle eines Elektromotors verdrehfest, gleichwohl aber axial verschieblich angeordnet. Im bestimmungsgemäßen Anwendungsfall verdreht die Bremsscheibe mithin zusammen mit der Welle, auf welcher sie angeordnet ist.

Die Federkraftbremse verfügt des Weiteren über einen Elektromagneten. Dieser weist ein Magnetgehäuse und eine Spule auf, wobei das Magnetgehäuse die Spule aufnimmt. Zu diesem Zweck verfügt das Magnetgehäuse typischerweise über einen ringspaltförmig ausgebildeten Aufnahmeraum, der korrespondierend zur Kontur der Spule ausgebildet ist.

Es sind des Weiteren eine axial verschieblich zwischen der Bremsscheibe und dem Magnetgehäuse angeordnete Ankerplatte und ein verdrehfest am Motorgehäuse angeordneter Flansch vorgesehen. Dabei sind die Bremsscheibe und die Ankerplatte zwischen dem Flansch und dem Magnetgehäuse angeordnet.

Die Ankerplatte ist ihrerseits gegenüber dem Magnetgehäuse verdrehfest, gleichwohl aber axial verschieblich angeordnet, und zwar unter Zwischenordnung von Druckfederelementen am Magnetgehäuse. Im endmontierten Zustand sorgen die Druckfederelemente dafür, dass sich die Ankerplatte gegenüber dem Magnetgehäuse in Richtung der Bremsscheibe abstützt.

Im bestimmungsgemäßen Anwendungsfall kann zwischen einer Bestromung und einer Nichtbestromung der Spule des Elektromagneten unterschieden werden. Bei einer Nichtbestromung der Spule drücken die Druckfederelemente die Ankerplatte gegen den Flansch, und zwar unter Einklemmung der Bremsscheibe. Die Bremsscheibe ist so reibschlüssig zwischen dem Flansch und der Ankerplatte eingeklemmt, wobei eine erste Reibpaarung durch den Flansch und die Bremsscheibe und eine zweite Reibpaarung durch die Bremsscheibe und die Ankerplatte gegeben sind. Der so im Falle einer Nichtbestromung der Spule des Elektromagnetens entstehende Reibschluss führt zu einem Stillsetzen der Bremsscheibe und damit auch zu einem Stillsetzen der mit der Bremsscheibe in Wirkverbindung stehenden Welle, beispielsweise der Ausgangswelle eines Elektromotors.

Im Falle einer Bestromung der Spule führt dies zu einer Magnetisierung des Magnetgehäuses des Elektromagnetens. Infolgedessen kommt es zu einem magnetischen Anziehen der Ankerplatte durch das Magnetgehäuse, und zwar entgegen der auf die Ankerplatte einwirkenden Druckfederelemente. Infolgedessen wird die reibschlüssige Festklemmung der Bremsscheibe zwischen Flansch und Ankerplatte aufgehoben und die Bremsscheibe freigegeben. Eine mit der Bremsscheibe in Wirkverbindung stehende Welle kann in dieser Stellung der Ankerplatte frei drehen, weil die damit kraftgekoppelte Bremsscheibe im Spalt zwischen Flansch und Ankerplatte frei beweglich ist.

Um im bestimmungsgemäßen Anwendungsfall einen hinreichenden Reibschluss zwischen Flansch und Bremsscheibe einerseits sowie zwischen Bremsscheibe und Ankerplatte andererseits ausbilden zu können, verfügen die Bremsscheiben gattungsgemäßer Federkraftbremsen über von der Bremsscheibe getragene Reibbeläge. Dabei sind ein flanschseitiger Reibbelag einerseits sowie ein ankerplattenseitiger Reibbelag andererseits vorgesehen. Diese Reibbeläge bestehen typischerweise aus einem organischen Material, das der Federkraftbremse je nach Zusammensetzung entsprechende Eigenschaften verleiht. Im Bereich der elektromagnetisch betätigbaren Federkraftbremsen sind allerdings auch Anwendungen von Reibbelägen aus Sinterwerkstoffen, z.B. aus DE 203 03 060 U1, DE 32 34 718 A1 und DE 29 01 784 A1, bekannt.

Obgleich sich vorbekannte Federkraftbremsen im alltäglichen Praxiseinsatz bewährt haben, besteht Verbesserungsbedarf. So ist insbesondere eine verbesserte Temperaturverträglichkeit bei gleichzeitig kompakterer Bauform angestrebt. Es ist deshalb die der Erfindung zugrundeliegende Aufgabe, eine Federkraftbremse der gattungsgemäßen Art konstruktiv dahingehend weiterzuentwickeln, dass bei einer verbesserten Temperaturverträglichkeit ein insgesamt kompakterer Aufbau gegeben ist.

Zur Lösung dieser Aufgabe wird mit der Erfindung eine Federkraftbremse der eingangs genannten Art vorgeschlagen, die sich dadurch auszeichnet, dass ein Reibpartner einer der beiden Reibpaarungen eine mit Sintermaterial ausgerüstete Reiboberfläche bereitstellt.

Die erfindungsgemäß ausgebildete Federkraftbremse verfügt über zwei Reibpaarungen, und zwar über eine erste Reibpaarung zwischen der Bremsscheibe und dem Flansch einerseits und über eine zweite Reibpaarung zwischen der Bremsscheibe und der Ankerplatte andererseits. Dabei sind die Reibpaarungen jeweils metallisch ausgebildet, es kommen also insbesondere keine organischen Reibbeläge zum Einsatz. Vorzugsweise ist zudem vorgesehen, dass die Reibpaarungen unterschiedlich ausgebildet sind, d. h. es sind eine erste metallische Reibpaarung und eine zweite metallische Reibpaarung gegeben, wobei die beiden Reibpaarungen nicht identisch zueinander ausgebildet sind. Erfindungsgemäß ist vorgesehen, dass ein Reibpartner einer der beiden Reibpaarungen eine mit Sintermaterial ausgerüstete Reiboberfläche bereitstellt. Demnach ist an einer der beiden Reibpaarungen ein Reibpartner mit einer Reibfläche beteiligt, die durch Sintermaterial bereitgestellt ist. Dieser erfindungsgemäß vorgesehene eine Reibpartner kann als Bestandteil der ersten Reibpaarung von dem Flansch oder der Bremsscheibe oder als Bestandteil der zweiten Reibpaarung von der Bremsscheibe oder der Ankerplatte bereitgestellt sein.

Im Ergebnis der erfindungsgemäßen Ausgestaltung stehen zwei metallische Reibpaarungen, wobei zumindest eine Reibpaarung einen Reibpartner aufweist, der eine mit Sintermaterial ausgerüstete Reiboberfläche bereitstellt.

Im Unterschied zu herkömmlich ausgebildeten Federkraftbremsen erbringt die erfindungsgemäße Ausgestaltung eine Mehrzahl von Vorteilen. So ist beispielsweise im Unterschied zur Verwendung organischer Reibbeläge die Höhe der zulässigen Reibenergien maximiert. Von Vorteil ist es des Weiteren, dass eine ausgezeichnete Drehmomentstabilität auch und gerade bei aufeinanderfolgenden dynamischen Bremsungen sichergestellt ist. Dies erbringt insbesondere eine sichere Anwendung im bestimmungsgemäßen Verwendungsfall. Das daher engere Drehmomentfenster über Temperatur erlaubt eine genauere und kompaktere Dimensionierung der umgebenden Komponenten. Eine Überdimensionierung dieser kann so vermieden werden. Von Vorteil ist es darüber hinaus, dass eine erhöhte Temperaturverträglichkeit erreicht ist. Auch hierdurch wird ein zuverlässiger und sicherer Betrieb der Federkraftbremse unterstützt. In diesem Zusammenhang ist es ferner von Vorteil, dass die Reibpaarungen einen temperaturunempfindlicheren Reibwert zur Verfügung stellen. Es kann so insbesondere Verschleißerscheinungen sowie thermisch bedingter Versagensvorfällen vorgebeugt werden.

Nicht zuletzt ist die erreichte kompakte Bauweise der erfindungsgemäßen Federkraftbremse von Vorteil. Diese ergibt sich insbesondere dadurch, dass auf Reibbeläge, insbesondere organische Reibbeläge verzichtet werden kann, womit die Federkraftbremse in Dickenrichtung der Bremsscheibe weniger stark aufbaut. Es kann so im Unterschied zum Stand der Technik bei gleicher Baugröße eine im Drehmoment verbesserte Federkraftbremse beziehungsweise bei gleicher Bremsleistung eine in ihren geometrischen Abmessungen verkleinerte Federkraftbremse bereitgestellt werden.

In der Kombination der erfindungsgemäß vorgesehenen Reibpaarungen können sowohl dynamische als auch statische Belastungen sicher abgebremst werden. Dabei gestatte die Ausgestaltung metallischer Reibpaarungen einen insgesamt kompakteren Gesamtaufbau, sodass der insgesamt zur Verfügung stehende Bauraum optimierter ausgenutzt werden kann.

Gemäß einem weiteren Merkmal der Erfindung ist vorgesehen, dass die beiden metallischen Reibpaarungen unterschiedlich ausgebildet sind. Demnach sind eine erste metallische Reibpaarung und eine zweite metallische Reibpaarung gegeben, wobei die beiden Reibpaarungen nicht identisch zueinander ausgebildet sind. Diese Ausgestaltung ermöglicht es, im jeweiligen Anwendungsfall gezielt auf bestimmte Eigenschaften der Reibpaarungen auch in kombinierter Betrachtung Einfluss zu nehmen.

Gemäß einem weiteren Merkmal der Erfindung ist vorgesehen, dass die Ankerplatte benutzerseitig eine mit Sintermaterial ausgerüstete Reiboberfläche bereitstellt. Der wenigstens eine Reibpartner, der eine mit Sintermaterial ausgerüstete Reiboberfläche bereitstellt, ist mithin bevorzugterweise die Ankerplatte, und zwar mit ihrer Bremsscheibenseite. Die Ankerplatte ist deshalb bremsscheibenseitig in erfindungsgemäßer Weise mit Sintermaterial ausgerüstet.

Diese bevorzugte Ausführungsform der Erfindung bietet den Vorteil, dass im bestimmungsgemäßen Verwendungsfall eine direkte Kraftbeaufschlagung derjenigen Reibpaarung mit dem mit Sintermaterial ausgerüsteten Reibpartner durch die Druckfederelemente stattfindet. Dies führt zu einer optimierten Reibschlussausbildung zwischen der Ankerplatte und der Bremsscheibe, was zu einer optimierten Bremsleistung führt.

Gemäß einem weiteren Merkmal der Erfindung ist vorgesehen, dass die Ankerplatte aus einem magnetischen Trägermaterial gebildet ist, auf das bremsscheibenseitig Streusintermaterial aufgebracht und verbacken ist.

Die Ankerplatte besteht aus einem magnetischen Trägermaterial. Dies deshalb, damit im bestimmungsgemäßen Anwendungsfall ein magnetisches Anziehen durch das magnetisierte Magnetgehäuse stattfinden kann. Zur Ausbildung der bremsscheibenseitigen Reiboberfläche ist auf das Trägermaterial der Ankerplatte Sintermaterial aufgestreut und thermisch verbacken. Es ist so eine preisgünstige Herstellung ermöglicht, und dies bei gleichzeitiger Ausbildung einer dauerhaften Verbindung zwischen dem die Reiboberfläche bereitstellenden Sintermaterial und dem Trägermaterial der Ankerplatte. Es ist so ein zuverlässiger Betrieb der erfindungsgemäßen Federkraftbremse sichergestellt.

Der Einsatz von Streusintermaterial ermöglicht darüber hinaus ein in einfacher Weise reproduzierbares Ausbilden einer Ankerplatte im erfindungsgemäßen Sinn, was für eine gleichbleibende Herstellqualität förderlich ist. Zudem kann auf den späteren Reibschluss beziehungsweise das Reibverhalten in vorteilhafter Weise dadurch gezielt Einfluss genommen werden, über welche Bereiche und welcher Dicke ein Auftrag mit Sintermaterial stattfindet. So ist beispielsweise gemäß einem weiteren Merkmal der Erfindung vorgesehen, dass das Sintermaterial auf das Trägermaterial nicht vollflächig, sondern nur teilflächig aufgebracht ist. So kann insbesondere vorgesehen sein, Sektoren vorzusehen, in denen die Ankerplatte mit Sintermaterial ausgerüstet ist, wobei dazwischenliegende Bereiche sintermaterialfrei ausgebildet sind. Es können so beispielsweise Luftströmungswege ausgebildet werden, die im bestimmungsgemäßen Verwendungsfall einer Kühlung dienen.

Gemäß einem weiteren Merkmal der Erfindung ist vorgesehen, dass die streugesinterten Teilflächen Unterbrechungen in Umfangsrichtung und/oder in radialer Richtung aufweisen. Ein abrasiver Verschleiß oder Abrieb kann in den entstehenden Aussparungen besser abgeführt werden. Ein Fressen kann somit verhindert und ein stabileres Reibverhalten erzielt werden.

Gemäß einem weiteren Merkmal der Erfindung ist vorgesehen, dass das Streusintermaterial eine Materialmischung ist, und zwar vorzugsweise eine Materialmischung auf Bronzebasis. Über die Zusammensetzung der Materialmischung kann gleichfalls gezielt auf spätere Reibeigenschaften Einfluss genommen werden, sodass je nach späterem Anwendungsfall hinsichtlich der Materialmischungsausgestaltung unterschieden werden kann. Auch ist es möglich, Bereiche oder Sektoren der Ankerplatte mit jeweils unterschiedlichen Materialmischungen auszurüsten. Auch hierdurch kann auf den Reibwert der Reibfläche und damit auf die späteren Reibeigenschaften gezielt Einfluss genommen werden.

Gemäß einem weiteren Merkmal der Erfindung ist vorgesehen, dass die Materialmischung auch einen nichtmetallischen Bestandteil beinhaltet. Derlei nichtmetallische Bestandteile können insbesondere solche sein, die für ein besseres Anhaften des Sintermaterials am Trägermaterial und/oder für eine verbesserte dauerfeste Verbindung der einzelnen Materialkomponenten und/oder verbesserte Verschleißeigenschaften und/oder verbesserte Reibwertstabilitäten der Materialmischung sorgen.

Gemäß einem weiteren Merkmal der Erfindung ist vorgesehen, dass die Bremsscheibe aus einem nichtmagnetischen Trägermaterial, vorzugsweise Edelstahl gebildet und reibbelagsfrei ausgebildet ist.

Die Bremsscheibe besteht aus einem nichtmagnetischen Material, sodass im bestimmungsgemäßen Verwendungsfall ein magnetisches Anziehen durch den Elektromagneten unterbleibt. Ein durch das magnetische Anziehen der metallischen Bremsscheibe bedingtes Restmoment wird auf diese Weise unterbunden. Die Bremsscheibe ist reibbelagsfrei ausgebildet, sodass die der Ankerplatte zugewandte Oberfläche der Bremsscheibe direkt in Kontakt mit der von der Ankerplatte bereitgestellten Reibfläche kommt. Es ist so auf zusätzliche Herstellschritte und/oder Komponenten verzichtet, was eine vereinfachte und preisgünstige Herstellung ermöglicht.

Gemäß einem weiteren Merkmal der Erfindung ist vorgesehen, dass die Bremsscheibe flansch- und ankerplattenseitig oberflächenbehandelt ausgebildet ist. Gemäß dieser bevorzugten Ausführungsform der Erfindung ist die Bremsscheibe nachbehandelt, insbesondere oberflächenbehandelt ausgebildet, sodass eine noch weiter verbesserte Reibverbindung im bestimmungsgemäßen Verwendungsfall ausgebildet wird. Darüber hinaus kann die Verschleißfestigkeit und die Dauerbeständigkeit der Bremsscheibe durch eine entsprechende Oberflächenbehandlung erreicht werden.

Gemäß einer besonders bevorzugten Ausführungsform der Erfindung ist vorgesehen, dass das Trägermaterial der Bremsscheibe salzbadnitriert ausgebildet ist. Insbesondere in Kombination mit einem Streusintermaterial auf Bronzebasis ist so eine Reibpaarung geschaffen, die optimierte Bremsleistungen bei gleichzeitiger Verschleißarmut gewährleistet.

Gemäß einem weiteren Merkmal der Erfindung ist vorgesehen, dass der Flansch aus einem niedrig- oder unlegierten Stahl gebildet ist. Der Flansch dient in axialer Richtung als Widerlager, gegen den die Ankerplatte unter Zwischenordnung der Bremsscheibe gepresst ist, sofern die Spule des Magneten stromlos ist. Es ist insoweit ausreichend, den Flansch aus einem niedrig- oder unlegierten Stahl zu bilden, was hilft, die Herstellkosten zu minimieren. Darüber hinaus kann in einfacher Weise eine Materialverarbeitung bei der Herstellung durch spanabhebende Bearbeitungsverfahren durchgeführt werden.

Mit der erfindungsgemäßen Federkraftbremse wird insgesamt eine Konstruktion vorgeschlagen, die erhöhte Reibenergien zulässt, eine ausgezeichnete Drehmomentenstabilität bereitstellt und eine erhöhte Temperaturverträglichkeit aufweist. Insgesamt wird damit eine im Unterschied zum Stand der Technik leistungsverbesserte Federkraftbremse zur Verfügung gestellt.

Weitere Merkmale und Vorteile der Erfindung ergeben sich aus der nachfolgenden Beschreibung anhand der Figuren. Dabei zeigen
- Fig. 1: in schematischer Explosionsdarstellung eine erfindungsgemäße Federkraftbremse und
- Fig. 2: ausschnittsweise in schematischer Explosionsdarstellung die Anordnung von Flansch, Bremsscheibe und Ankerplatte.

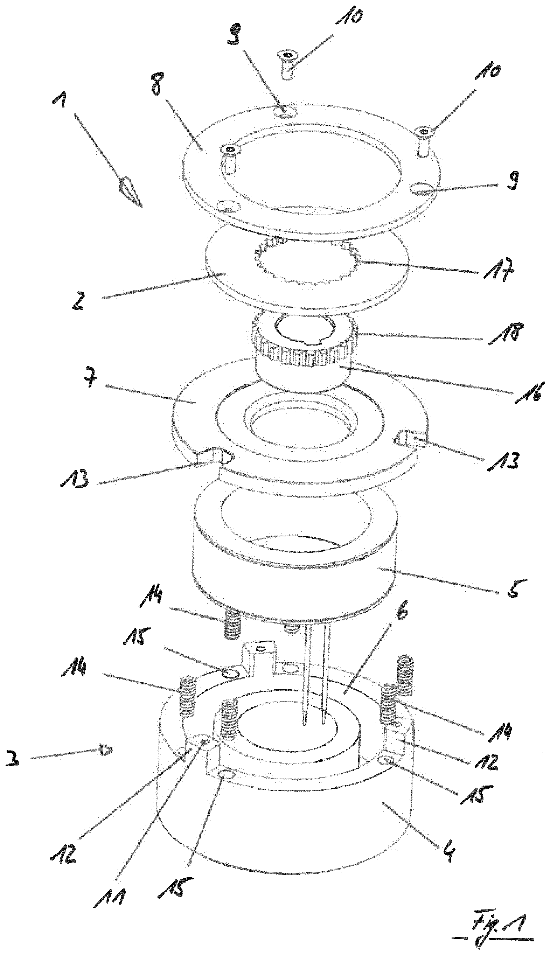

Figur 1 lässt schematisch in einer Explosionsdarstellung eine erfindungsgemäße Federkraftbremse 1 erkennen. Diese ist elektromagnetisch betätigbar ausgebildet und verfügt über einen Elektromagneten 3, eine Bremsscheibe 2 und einen Flansch 8.

Im endmontierten Zustand ist die Bremsscheibe 2 auf einer in den Figuren in nicht näher dargestellten Welle, beispielsweise der Ausgangswelle eines Elektromotors, verdrehfest, gleichwohl aber in Wellenlängsrichtung axial verschieblich angeordnet. Zu diesem Zweck kann in an sich bekannter Weise eine Welle-Nabe-Verbindung vorgesehen sein, wobei die Bremsscheibe 2 eine Verzahnungskontur 17 bereitstellt, die im endmontierten Zustand mit der Gegenkontur 18 einer Nabe 16 in Wirkverbindung steht.

Der Elektromagnet 3 verfügt über ein Magnetgehäuse 4, das eine Spule 5 aufnimmt. Zu diesem Zweck verfügt das Magnetgehäuse 4 über einen Ringspalt 6, der korrespondierend zur geometrischen Ausgestaltung der Spule 5 ausgebildet ist.

Die Ankerplatte 7 ist axial verschieblich zwischen der Bremsscheibe 2 und dem Magnetgehäuse 4 angeordnet. Diese axial verschiebliche Anordnung erfolgt unter Zwischenordnung von Druckfederelementen 14. Diese sind in vom Magnetgehäuse 4 bereitgestellten Bohrungen 15 gelagert und drücken im endmontierten Zustand in Höhenrichtung von unten an die Ankerplatte 7, d. h. die Federelemente 14 wirken auf die Ankerplatte 7 über die der Bremsscheibe 2 abgewandte Seite der Ankerplatte 7 auf die Ankerplatte 7 ein.

Die Ankerplatte 7 ist gegenüber dem Magnetgehäuse 4 verdrehfest positioniert, was durch Formschluss dadurch erreicht ist, dass die Ankerplatte 7 Ausklinkungen 13 aufweist, in die im endmontierten Zustand gehäuseseitige Fortsätze 12 eingreifen.

Im Ergebnis der vorbeschriebenen Konstruktion ist die Ankerplatte 7 im endmontierten Zustand verdrehfest, gleichwohl aber unter Zwischenordnung der Druckfederelemente 14 axial verschieblich gegenüber dem Magnetgehäuse 4 am Magnetgehäuse 4 angeordnet.

Der Flansch 8 ist verdrehfest mit dem Magnetgehäuse 4 verbunden, zu welchem Zweck Schrauben 10 vorgesehen sind, die durch flanschseitige Ausnehmungen 9 hindurch in Gewindebohrungen 11 des Magnetgehäuses 4 im endmontierten Zustand eingreifen. Dabei sind die Bremsscheibe 2 und die Ankerplatte 7 zwischen Flansch 8 und Magnetgehäuse 4 angeordnet.

Bei bestromter Spule 5 wird das Magnetgehäuse 4 des Elektromagneten 3 magnetisiert, was zu einem Anziehen der Ankerplatte 7 durch das Magnetgehäuse 4 führt. Es bildet sich so ein die Dicke der Bremsscheibe 2 übersteigender Spalt zwischen Flansch 8 und Ankerplatte 7 aus, sodass die Bremsscheibe 2 zwischen Flansch 8 und Ankerplatte 7 frei verdrehen kann. Dies ermöglicht eine Verdrehbewegung der die Bremsscheibe 2 tragenden Welle, beispielsweise eines Elektromotors.

Sobald eine Bestromung der Spule 5 abgeschaltet wird oder ausfällt, unterbleibt ein magnetisches Anziehen der Ankerplatte 7 durch den Elektromagneten 3, sodass die Ankerplatte 7 induziert durch die Druckfederelemente 14 in Höhenrichtung nach oben verfahren und gegen den Flansch 8 gedrückt wird, und dies unter Zwischenordnung der Bremsscheibe 2. Infolgedessen kommt es zu einem Reibschluss insbesondere zwischen der Ankerplatte 7 und der Bremsscheibe 2 aber auch zwischen der Bremsscheibe 2 und dem Flansch 8. Dieser Reibschluss sorgt für ein Festsetzen der Bremsscheibe 2 mit der Folge, dass eine Verdrehbewegung der Bremsscheibe 2 nicht weiter möglich ist, und damit auch nicht eine Verdrehbewegung der die Bremsscheibe 2 tragenden Welle, beispielsweise der Welle eines Elektromotors. Dieser ist mithin durch die Festsetzung der Bremsscheibe 2 abgebremst.

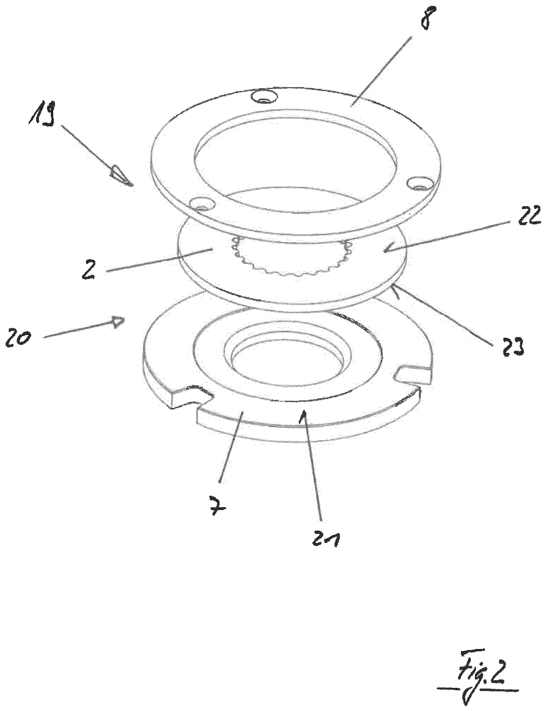

Figur 2 lässt in einer Detailansicht die zwischen Flansch 8 und Ankerplatte 7 angeordnete Bremsscheibe 2 erkennen. Wie sich aus dieser Darstellung im Besonderen ergibt, sind zwei Reibpaarungen 19 und 20 vorgesehen, nämlich eine erste Reibpaarung 19 zwischen der Bremsscheibe 2 und dem Flansch 8 einerseits und eine zweite Reibpaarung 20 zwischen der Bremsscheibe 2 und der Ankerplatte 7 andererseits. Erfindungsgemäß ist nun vorgesehen, dass die beiden Reibpaarungen 19 und 20 unterschiedlich ausgebildete, metallische Reibpaarungen 19, 20 sind. Die beiden Reibpaarungen 19 und 20 sind mithin jeweils metallisch ausgebildet, unterscheiden sich aber voneinander. Dabei ist zumindest ein Reibpartner vorgesehen, der eine mit Sintermaterial ausgerüstete Reiboberfläche bereitstellt.

Gemäß dem gezeigten Ausführungsbeispiel wird dieser erfindungsgemäß vorgesehener Reibpartner durch die Ankerplatte 7 gebildet, der bremsscheibenseitig eine Reiboberfläche 21 bereitstellt, die mit Sintermaterial ausgerüstet ist.

Die Bremsscheibe 2 ist ihrerseits aus einem nichtmagnetischen Trägermaterial gebildet, wie z. B. Edelstahl. Dabei sind die Flanschseite 22 und die Ankerplattenseite 23 oberflächenbehandelt ausgebildet, beispielsweise salzbadnitriert.

Der Flansch 8 besteht insbesondere aus Kostengründen aus einem niedrig- oder unlegierten Stahl. Es ergeben sich so im Ergebnis die beiden Reibpaarungen 19 und 20, die voneinander unterschiedlich metallisch ausgebildet sind.

### Bezugszeichen

- 1: Federkraftbremse
- 2: Bremsscheibe
- 3: Elektromagnet
- 4: Magnetgehäuse
- 5: Spule
- 6: Ringspalt
- 7: Ankerplatte
- 8: Flansch
- 9: Ausnehmung
- 10: Schraube
- 11: Gewindebohrung
- 12: Fortsatz
- 13: Ausklinkung
- 14: Druckfederelement
- 15: Bohrung
- 16: Nabe
- 17: Verzahnungsgeometrie
- 18: Gegengeometrie
- 19: Reibpaarung
- 20: Reibpaarung
- 21: Reiboberfläche
- 22: Flanschseite
- 23: Ankerplattenseite

## Patentansprüche

1. Elektromagnetisch betätigbare Federkraftbremse, mit einer auf einer Welle verdrehfest, gleichwohl aber axial verschieblich anordbaren Bremsscheibe (2), die aus einem nicht magnetischen Trägermaterial gebildet ist, einem Elektromagneten (3), der ein Magnetgehäuse (4) und eine davon aufgenommene Spule (5) aufweist, einer axial verschieblich zwischen der Bremsscheibe (2) und dem Magnetgehäuse (4) angeordneten Ankerplatte (7) und einem verdrehfest am Magnetgehäuse (4) angeordneten Flansch (8), wobei die Bremsscheibe (2) und die Ankerplatte (7) zwischen dem Flansch (8) und dem Magnetgehäuse (4) angeordnet sind und wobei die Ankerplatte (7) verdrehfest, gleichwohl aber unter Zwischenordnung von Druckfederelementen (14) axial verschieblich gegenüber dem Magnetgehäuse (4) am Magnetgehäuse (4) angeordnet ist, wobei metallische Reibpaarungen (19, 20) zwischen der Bremsscheibe (2) und dem Flansch (8) einerseits und zwischen der Bremsscheibe (2) und der Ankerplatte (7) andererseits vorgesehen sind, wobei ein Reibpartner einer der beiden Reibpaarungen (19, 20) eine mit Sintermaterial ausgerüstete Reiboberfläche bereitstellt,
**dadurch gekennzeichnet,**
**dass** die Ankerplatte (7) oder der Flansch (8) bremsscheibenseitig eine mit Sintermaterial ausgerüstete Reiboberfläche (21) bereitstellen, wobei die Bremsscheibe (2) reibbelagfrei ausgebildet ist.

2. Federkraftbremse nach Anspruch 1, **dadurch gekennzeichnet, dass** die beiden metallischen Reibpaarungen (19, 20) unterschiedlich ausgebildet sind.

3. Federkraftbremse nach Anspruch 1 oder 2, **dadurch gekennzeichnet, dass** die Ankerplatte (7) aus einem magnetischen Trägermaterial gebildet ist, auf das bremsscheibenseitig Streusintermaterial aufgebracht und verbacken ist.

4. Federkraftbremse nach Anspruch 3, **dadurch gekennzeichnet, dass** das Streusintermaterial auf das Trägermaterial teilflächig aufgebracht ist.

5. Federkraftbremse nach Anspruch 4, **dadurch gekennzeichnet, dass** die streugesinterten Teilflächen Unterbrechungen in Umfangsrichtung und/oder in radialer Richtung aufweisen.

6. Federkraftbremse nach einem der Ansprüche 3 bis 5, **dadurch gekennzeichnet, dass** das Streusintermaterial eine Materialmischung auf Basis einer Kupferlegierung, vorzugsweise Bronze ist.

7. Federkraftbremse nach Anspruch 6, **dadurch gekennzeichnet, dass** die Materialmischung einen nicht metallischen Bestandteil aufweist.

8. Federkraftbremse nach einem der vorhergehenden Ansprüche, **dadurch gekennzeichnet, dass** die Bremsscheibe (2) flansch- und/oder ankerplattenseitig oberflächenbehandelt ausgebildet ist.

9. Federkraftbremse nach Anspruch 8, **dadurch gekennzeichnet, dass** die Bremsscheibe (2) nitriert, vorzugsweise salzbadnitriert ausgebildet ist.

10. Federkraftbremse nach einem der vorhergehenden Ansprüche, **dadurch gekennzeichnet, dass** der Flansch (8) aus einem niedrig- oder unlegierten Stahl gebildet ist.

## Claims

1. Electromagnetically operated spring-applied brake comprising a brake disc (2) which can be arranged on a shaft in a rotationally fixed but axially displaceable manner and is formed from a non-magnetic carrier material, an electromagnet (3) which has a magnet housing (4) and a coil (5) accommodated by it, an armature plate (7) which is arranged in an axially displaceable manner between the brake disc (2) and the magnet housing (4), and a flange (8) which is arranged in a rotationally fixed manner on the magnet housing (4), wherein the brake disc (2) and the armature plate (7) are arranged between the flange (8) and the magnet housing (4) and wherein the armature plate (7) is arranged on the magnet housing (4) so as to be non-rotatable but nevertheless axially displaceable relative to the magnet housing (4) with the interposition of compression spring elements (14), wherein metallic friction pairings (19, 20) are provided between the brake disk (2) and the flange (8) on the one hand and between the brake disk (2) and the armature plate (7) on the other hand, wherein a friction partner of one of the two friction pairings (19, 20) provides a friction surface equipped with sintered material,
**characterized in**
**that** the armature plate (7) or the flange (8) provide a friction surface (21) equipped with sintered material on the brake disc side, the brake disc (2) being designed without friction lining.

2. Spring-applied brake according to claim 1, **characterized in that** the two metallic friction pairings (19, 20) are designed differently.

3. Spring-applied brake according to claim 1 or 2, **characterized in that** the armature plate (7) is formed from a magnetic carrier material to which scatter sinter material is applied to and baked on the brake disc side.

4. Spring-applied brake according to claim 3, **characterized in that** the scatter material is applied to the carrier material over part of its surface.

5. Spring-applied brake according to claim 4, **characterized in that** the scatter-sintered partial surfaces have interruptions in the circumferential direction and/or in the radial direction.

6. Spring-applied brake according to any one of claims 3 to 5, **characterized in that** the scatter sinter material is a material mixture based on a copper alloy, preferably bronze.

7. Spring-applied brake according to claim 6, **characterized in that** the material mixture has a non-metallic component.

8. Spring-applied brake according to any one of the preceding claims, **characterized in that** the brake disc (2) is surface-treated on the flange and/or armature plate side.

9. Spring-applied brake according to claim 8, **characterized in that** the brake disc (2) is nitrided, preferably salt-bath nitrided.

10. Spring-applied brake according to any one of the preceding claims, **characterized in that** the flange (8) is formed from a low-alloyed or unalloyed steel.

## Revendications

1. Frein à ressort à commande électromagnétique comprenant un disque de frein (2) qui peut être disposé sur un arbre de manière à ne pas pouvoir tourner, mais néanmoins à pouvoir se déplacer axialement, et qui est formé d'un matériau de support non magnétique, un électroaimant (3) qui présente un boîtier d'aimant (4) et une bobine (5) logée dans celui-ci, une plaque d'armature (7) disposée de manière à pouvoir se déplacer axialement entre le disque de frein (2) et le boîtier d'aimant (4), et une bride (8) disposée de manière à ne pas pouvoir tourner sur le boîtier d'aimant (4), le disque de frein (2) et la plaque d'armature (7) étant disposés entre la bride (8) et le boîtier magnétique (4) et la plaque d'armature (7) étant disposée sur le boîtier magnétique (4) de manière à ne pas pouvoir tourner, mais néanmoins à pouvoir se déplacer axialement par rapport au boîtier magnétique (4) en intercalant des éléments de ressort de compression (14), des couples de frottement métalliques (19, 20) étant prévus entre le disque de frein (2) et la bride (8) d'une part et entre le disque de frein (2) et la plaque d'armature (7) d'autre part, un partenaire de frottement de l'un des deux couples de frottement (19, 20) fournissant une surface de frottement équipée d'un matériau fritté,
**caractérisé en ce que**
la plaque d'armature (7) ou la bride (8) fournit, du côté du disque de frein, une surface de friction (21) équipée d'un matériau fritté, le disque de frein (2) étant réalisé sans garniture de friction.

2. Frein à ressort selon la revendication 1, **caractérisé en ce que** les deux couples de frottement métalliques (19, 20) sont réalisés différemment.

3. Frein à ressort selon la revendication 1 ou 2, **caractérisé en ce que** la plaque d'armature (7) est formée d'un matériau de support magnétique sur lequel un matériau fritté de flocage est appliqué et cuit du côté du disque de frein.

4. Frein à ressort selon la revendication 3, **caractérisé en ce que** le matériau fritté de flocage est appliqué sur une partie de la surface du matériau de support.

5. Frein à ressort selon la revendication 4, **caractérisé en ce que** les surfaces partielles frittées par flocage présentent des interruptions dans la direction circonférentielle et/ou dans la direction radiale.

6. Frein à ressort selon l'une des revendications 3 à 5, **caractérisé en ce que** le matériau fritté de flocage est un mélange de matériaux à base d'un alliage de cuivre, de préférence de bronze.

7. Frein à ressort selon la revendication 6, **caractérisé en ce que** le mélange de matériaux comprend un composant non métallique.

8. Frein à ressort selon l'une des revendications précédentes, **caractérisé en ce que** le disque de frein (2) est réalisé avec un traitement de surface du côté de la bride et/ou de la plaque d'armature.

9. Frein à ressort selon la revendication 8, **caractérisé en ce que** le disque de frein (2) est nitruré, de préférence nitruré en bain de sel.

10. Frein à ressort selon l'une des revendications précédentes, **caractérisé en ce que** la bride (8) est formée d'un acier faiblement allié ou non allié.
